# EUROPEAN PATENT APPLICATION

(11) **EP 3 543 055 A1**
(43) Date of publication of application: **25.09.2019**
(21) Application number: 18182546.4
(22) Date of filing: 09.07.2018
(51) Int. Cl.: B60K 15/03, B60K 15/035, F02M 37/10, F02M 37/20, B60K 15/077

(54) **FUEL STORAGE DEVICE**

(30) Priority: 19.03.2018 US 201815924921
(71) Applicant: Kwang Yang Motor Co., Ltd., Kaohsiung City 807 (TW)
(72) Inventor: Lin, Chuang-Hsiung, Kaohsiung City 830 (TW); Yamamoto, Teruaki, Kobe-shi, Hyogo 6508670 (JP)
(74) Representative: Burton, Nick

(57) **Abstract**

A fuel storage device is adapted to be mounted to a vehicle, and has a tank (2), a pump (3), a fuel tube (4), a plurality of connecting tubes (5), and a vent tube (6). The tank (2) has a top wall (21) formed with a plurality of vent holes (211). At least one of the vent holes (211) is arranged at a side of a first imaginary line (L1) that extends through a reference point of the top wall (21) and that is perpendicular to a longitudinal direction of the vehicle, and at least one of the remaining of the vent holes (211) is arranged at an opposite side of the first imaginary line (L1). The fuel tube (4) is for passage of fuel from the pump (3). The connecting tubes (5) are connected respectively to the vent holes (211), and the vent tube (6) is adapted for communicating the connecting tubes (5) with the external environment.

## Description

The disclosure relates to a fuel tank, and more particularly to a fuel storage device for a vehicle.

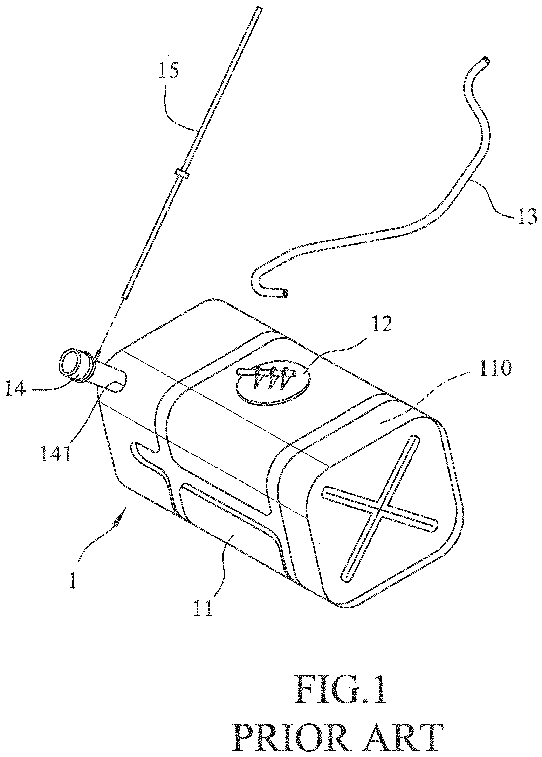

Referring to FIG. 1, a conventional fuel tank 1 is adapted to be mounted to a vehicle, and includes a main body 11, a pump 12, a fuel tube 13, an exhaust pipe 14 and a hose 15. The main body 11 defines a receiving space 110 that is adapted for receiving fuel therein. The pump 12 is mounted to the main body 11, and is adapted for pumping the fuel out of the receiving space 110. The fuel tube 13 is connected to the pump 12, and is adapted for passage of the fuel from the pump 12. The exhaust pipe 14 is connected to the main body 11 and has a vent hole 141 that is in fluid communication with the receiving space 110. The hose 15 is in fluid communication with the exhaust pipe 14 and external environment. During a pumping process of the fuel from the fuel tank 1, the pump 12 pumps the fuel from the receiving space 110 into the fuel tube 13. In order to maintain atmosphere pressure inside the receiving space 110, such that the fuel may pass through the fuel tube 13 smoothly, the hose 15 circulates air inside the receiving space 110 with the external environment.

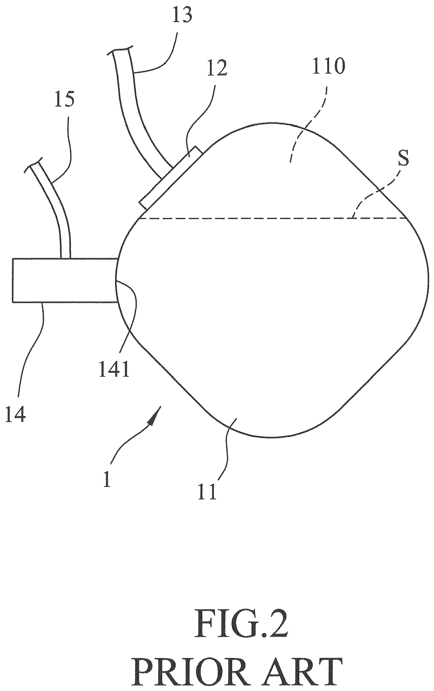

However, in a driving environment with slopes and bumps, the vehicle may not always be in the upright position. Referring to FIG.2, when the vehicle is in an inclined position, surface (S) of the fuel would be tilted relative to the fuel tank 1, such that the fuel immerses in and blows out of the vent hole 141, which in term blocks the circulation of air between the receiving space 110 and the external environment. Once the pressure difference builds up, the fuel may no longer be pumped out, causing failures of the engine of the vehicle while driving.

Therefore, an object of the disclosure is to provide a fuel storage device that can alleviate at least one of the drawbacks of the prior art.

According the disclosure, a fuel storage device is adapted to be mounted to a vehicle. The fuel storage device includes a tank, a pump, a fuel tube, a plurality of connecting tubes, and a vent tube. The tank defines a receiving space that is adapted for receiving fuel therein, and has a top wall that is formed with a plurality of vent holes. At least one of the vent holes is arranged at a side of a first imaginary line which extends through a reference point of the top wall and which is perpendicular to a longitudinal direction from a rear end to a front end of the vehicle. At least one of the remaining of the vent holes is arranged at an opposite side of the first imaginary line. The pump is mounted to the tank and is adapted for pumping the fuel out of the tank. The fuel tube is connected to the pump and is adapted for passage of the fuel from the pump. The connecting tubes are connected respectively to the vent holes. The vent tube is adapted for communicating the connecting tubes with the external environment.

Other features and advantages of the disclosure will become apparent in the following detailed description of the embodiments with reference to the accompanying drawings, of which:
FIG. 1 is a partly exploded perspective view of a conventional fuel tank;
FIG. 2 is a fragmentary schematic rear view of the conventional fuel tank at an inclined position;
FIG. 3 is a partly exploded perspective view of an embodiment of a fuel storage device according to this disclosure;
FIG. 4 is an assembled perspective view of the embodiment;
FIG. 5 is a top view of a tank and a pump of the embodiment; and
FIG. 6 is a rear view of the embodiment tilted to the left;
FIG. 7 is a rear view of the embodiment tilted to the right;
FIG. 8 is a side view of the embodiment on a downward slope; and
FIG. 9 is a side view of the embodiment on an upward slope.

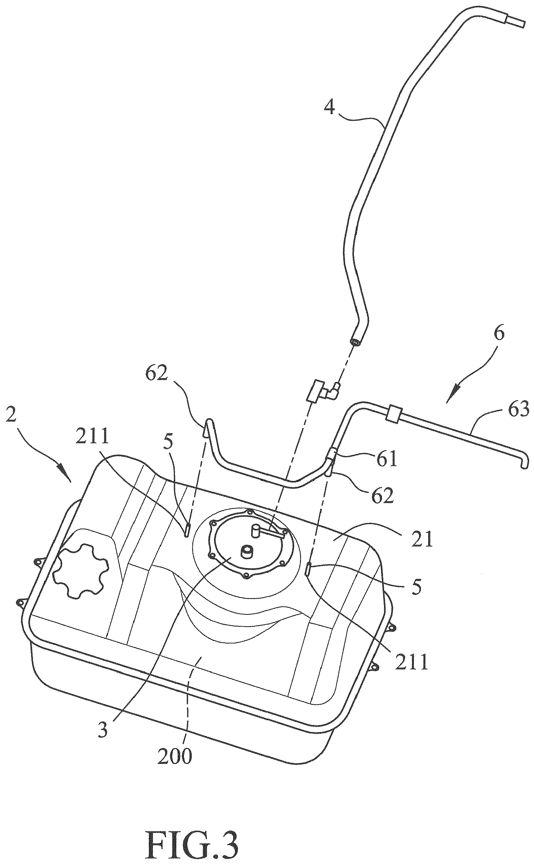

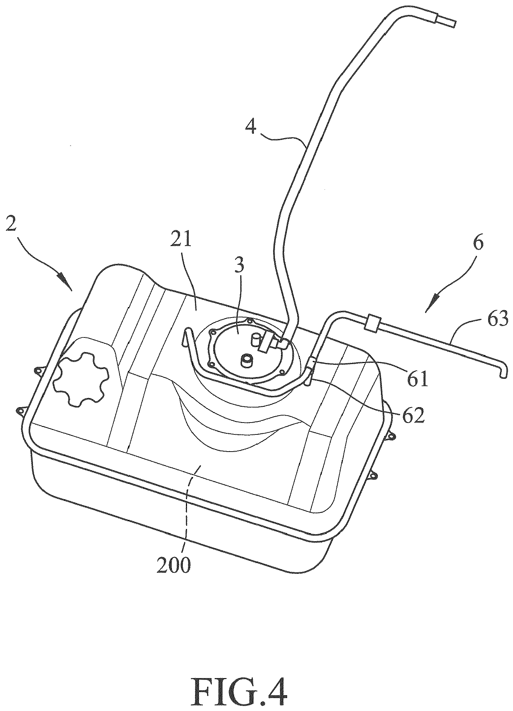

Referring to FIGS. 3 and 4, an embodiment of a fuel storage device according to the disclosure is adapted to be mounted to a vehicle (not shown) . The fuel storage device includes a tank 2 that defines a receiving space 200 which is adapted for receiving fuel therein, a pump 3 that is mounted to the tank 2 and that is adapted for pumping the fuel out of the receiving space 200, a fuel tube 4 that is connected to the pump 3 and that is adapted for passage of the fuel from the pump 3, two connecting tubes 5, and a vent tube 6.

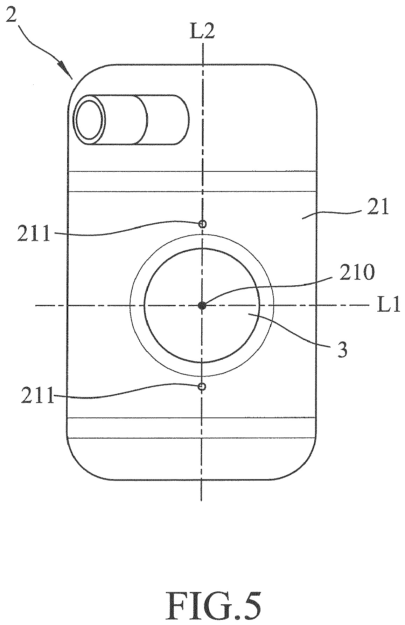

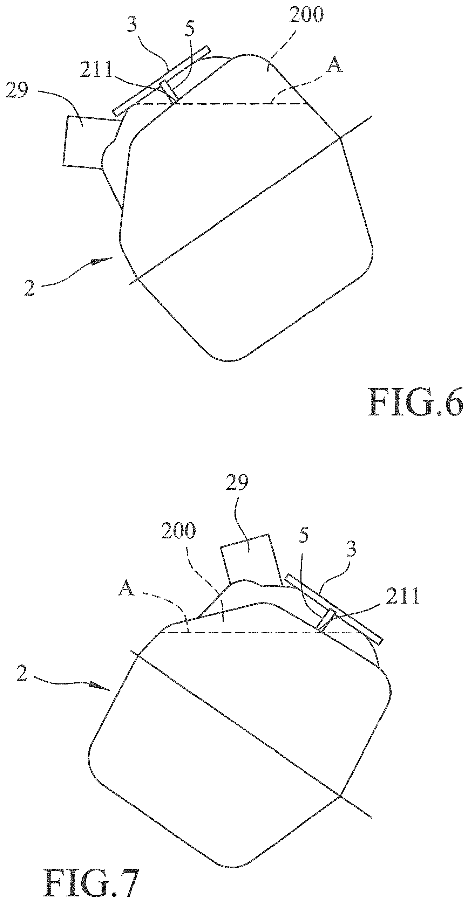

Referring to FIGS. 3 to 5, the tank 2 has a top wall 21 that is formed with two vent holes 211. In this embodiment, the vent holes 211 are arranged respectively at opposite sides of a first imaginary line (L1) which extends through a reference point 210 of the top wall 211 and which is perpendicular to a longitudinal direction from a rear end to a front end of the vehicle. The reference point 210 in this embodiment is envisioned to be in proximity to center of the top wall 21. The vent holes 211 are arranged symmetrically with respect to the reference point 210, and are spaced apart from each other along a second imaginary line (L2) which extends in the longitudinal direction through the reference point 210. The pump 3 is mounted to the top wall 21 of the tank 2 and is located on the second imaginary line (L2), with the vent holes 211 being formed respectively at opposite sides of the pump 3. The tank 2 further has an opening 29 (see FIGS. 6 to 9) for refilling the fuel in the receiving space 200. The opening 29 remains sealed in this embodiment, and will not be discussed in further details.

The connecting tubes 5 are connected respectively to the vent holes 211. The vent tube 6 includes a T-shaped segment 61 and two connecting segments 62. Each of the connecting segments 62 connects the T-shaped segment 61 to a respective one of the connecting tubes 5. The vent tube 6 further includes an extending segment 63 that is adapted for communicating the T-shaped segment 61 with the external environment (i.e., the vent tube 6 is disposed for communicating the connecting tubes 5 with the external environment). In the end, the receiving space 200 fluidly communicates with the external environment through the two vent holes 211, the two connecting tubes 5, and the vent tube 6. Having a vent tube 6 connected to the connecting tubes 5 simplifies installation process and reduces costs of having too many tube elements in the embodiment. The extending segment 63 may be freely adjusted to be suitable for different vehicle models.

Referring to FIGS. 3, 5, 6 and 7, when the fuel storage device of this embodiment is mounted to the vehicle and the vehicle is driven on an uneven surface, the tank 2 is prone to tilt left or right. In either case, surface (A) of the fuel within the receiving space 200 would remain evenly perpendicular to the direction of gravity, but would be tilted relative to the tank 2 as shown in FIGS. 6 and 7. However, the vent holes 211 are disposed along the secondary imaginary line (L2), which is parallel and in close proximity to a central line of the top wall 21. As the vent holes 211 are located near the center, they are less likely engulfed by the fuel compared to vent hole 141 of the abovementioned prior art.

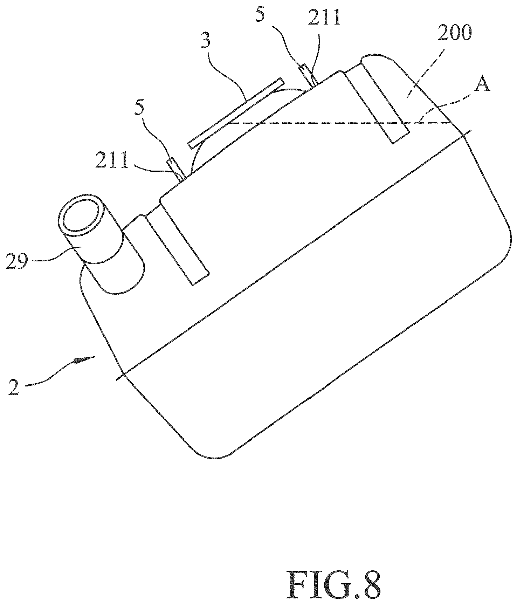

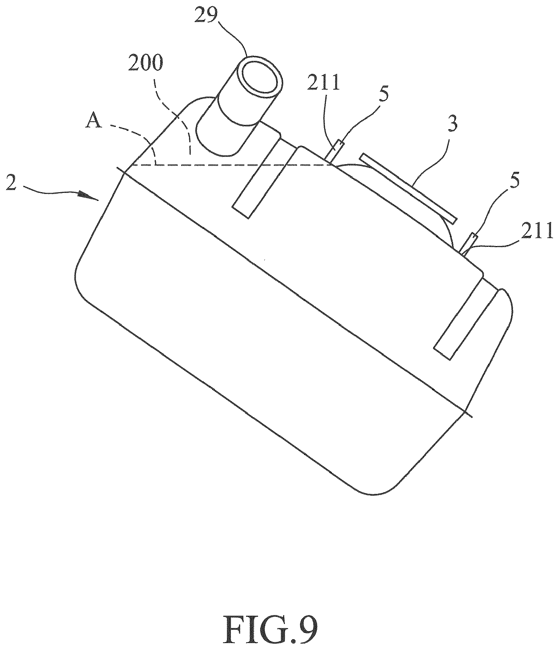

Referring to FIGS. 4, 5, 8 and 9, when the vehicle drives along a downward or upward slope, the tank 2 will incline either forward or backward. Likewise, the surface (A) of the fuel would be inclined relative to the tank 2 as shown in FIGS. 8 and 9. Given that the vent holes 211 are spaced apart from each other along the second imaginary line (L2), as long as the spacing between the two vent holes 211 are properly designed relative to the dimension of the tank 2, one of the vent holes 211 would still manage to fluidly communicates the receiving space 200 with the external environment through the respective connecting tube 5 and the vent tube 6. It is worth noting that, the spacing between the vent holes 211 may be altered in other embodiments to account for different vehicle types and driving environments.

In summary, the design of multitudes of vent holes 221 in the fuel storage device of the disclosure is capable of maintaining atmosphere pressure inside the receiving space 200 of the tank 2 when the vehicle is driven at an inclined path. In this case, when one of the vent holes 221 is immersed in the fuel for a period of time, the other vent hole 221 maintains circulation of air between the receiving space 200 of the tank 2 and the external environment, such that the fuel may pass through the fuel tube 4 smoothly. Furthermore, the vent holes 221 prevent the fuel from blowing out therefrom when the internal pressure of the tank 2 rises .

In the description above, for the purposes of explanation, numerous specific details have been set forth in order to provide a thorough understanding of the embodiments. It will be apparent, however, to one skilled in the art, that one or more other embodiments may be practiced without some of these specific details . It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A fuel storage device adapted to be mounted to a vehicle, said fuel storage device including:
a tank (2) defining a receiving space (200) that is adapted for receiving fuel therein, and having a top wall (21) that is formed with a plurality of vent holes (211); a pump (3) mounted to said tank (2) and adapted for pumping the fuel out of said tank (2);
a fuel tube (4) connected to said pump (3) and adapted for passage of the fuel from said pump (3);
a plurality of connecting tubes (5) connected respectively to said vent holes (211); and
a vent tube (6) adapted for communicating said connecting tubes (5) with the external environment;
**characterized in that**:
at least one of said vent holes (211) is arranged at a side of a first imaginary line (L1) that extends through a reference point of said top wall (21) and that is perpendicular to a longitudinal direction from a rear end to a front end of the vehicle, and at least one of the remaining of said vent holes (211) is arranged at an opposite side of the first imaginary line (L1).

2. The fuel storage device as claimed in claim 1, further **characterized in that** said vent holes (221) are arranged symmetrically with respect to the reference point.

3. The fuel storage device as claimed in claim 2, further **characterized in that** said top wall (21) is formed with two of said vent holes (211) that are spaced apart from each other along a second imaginary line (L2) which extends in the longitudinal direction through the reference point.

4. The fuel storage device as claimed in claim 3, further **characterized in that** said pump (3) is mounted to said top wall (21) of said tank (2) and located on the second imaginary line (L2), said vent holes (211) being formed respectively at opposite sides of said pump (3).

5. The fuel storage device as claimed in any one of the claims 3 and 4, further **characterized in that** said vent tube (6) includes:
a T-shaped segment (61);
two connecting segments (62), each connecting said T-shaped segment (61) to a respective one of said connecting tubes (5); and
an extending segment (63) adapted for communicating said T-shaped segment (61) with the external environment.
